# EUROPEAN PATENT APPLICATION

(11) **EP 2 554 930 A1**
(43) Date of publication of application: **06.02.2013**
(21) Application number: 11759078.6
(22) Date of filing: 08.02.2011
(51) Int. Cl.: F25B 41/04, F16K 15/03, F25B 17/08

(54) **VAPOR VALVE FOR ADSORPTION REFRIGERATOR, AND ADSORPTION REFRIGERATOR**

(30) Priority: 26.03.2010 JP 2010072534
(71) Applicant: National University Corporation Nagoya University, Nagoya-shi, Aichi 464-8601 (JP)
(72) Inventor: KOBAYASHI Noriyuki, Nagoya-shi Aichi 464-8601 (JP); SUMIYA Tadayoshi, Nagoya-shi Aichi 464-8601 (JP)
(74) Representative: Winter, Brandl, Fürniss, Hübner, Röss, Kaiser, Polte - Partnerschaft
(86) International application number: PCT/JP2011/052576
(87) International publication number: WO 2011/118270

(57) **Abstract**

[Problem] To provide a vapor valve for an adsorption refrigerator which can be made small and perform open/close operation in good condition even if gaseous refrigerant is condensed.

[Solution] A vapor valve includes a partitioning member 26 for partitioning a space containing gaseous vapor into two spaces 241, 242, 243, 244, wherein a communication mouth 261, 262, 263 ,264 for communicating the two spaces 241 to 244 with each other is formed at the partitioning member26; and a valve element 271 to 274 for opening and closing the communication mouth 261 to 264, wherein the valve element 271 to 274 is formed by a board for opening and closing the communication mouth 261 to 264 in accordance with a pressure difference between the two spaces 241 to 244, a slanted board portion sloping with respect to a horizontal direction and having a shape of a board is formed at the partitioning member 26, and the communication mouth 261 to 264 makes a hole penetrating both sides of the slanted board portion.

## Description

### [Technical Field]

The present invention relates to a vapor valve for an adsorption refrigerator and an adsorption refrigerator having the vapor valve, wherein the vapor vale controls a flow of gaseous refrigerant.

### [Background Art]

Conventionally, a vapor valve for an adsorption refrigerator and an adsorption refrigerator of this type are disclosed in PTLs 1 and 2. A vapor valve in PTL 1 includes a cylinder portion internally having a piston valve element which slides caused by a pressure difference between an internal pressure of a first adsorber/desorber and an internal pressure of a second adsorber/desorber, wherein a vapor passage is opened and closed by an automatic movement of the piston valve element in accordance with the pressure difference.

A vapor valve in PTL 2 includes a shell-shaped valve element having a surface convexly curbed toward a valve port, wherein a vapor passage is closed and opened when the valve element comes in touch with and gets apart from the valve port in accordance with a pressure difference between the upstream side and downstream side of the valve port.

### [Citation List]

### [Patent Literature]

[PTL 1]
   WO2006/135026
[PTL 2]
   JP-A-2002-257250

### [Summary of Invention]

### [Technical Problem]

In recent years, an adsorption refrigerator is required to be developed to fit in low power environments. In the development to fit in low power environments, downsizing of an adsorption refrigerator is a significant aim.

However, in the prior art in PTL 1, since the vapor valve includes a piston valve element and a cylinder portion, the size of the vapor valve becomes large and it becomes an obstacle to downsizing of the adsorption refrigerator.

In the prior art in PTL 2, the size of the vapor valve can be made smaller compared to that of the prior art in PTL 1 because the shell-shaped valve element comes in touch with and get apart from the valve port in accordance with the pressure difference. However, there is a problem that condensation of gaseous refrigerant harms the open/close operation. More specifically, the movement of the valve element is harmed when liquid refrigerant generated by the condensation of the gaseous refrigerant stays at a recessed portion of the valve element.

In light of the foregoing, it is an object of the present invention to provide a vapor valve for an adsorption refrigerator and an adsorption refrigerator having the vapor valve, wherein the vapor valve can be made small and perform open/close operation in good condition even if the gaseous refrigerant is condensed.

### [Solution to Problem]

In order to achieve the above-described object, an invention described in Claim 1 includes: a casing (24) for forming a space in which gaseous refrigerant is contained;
a partitioning member (26) for partitioning an interior of the casing (24) into two spaces (241, 242, 243, 244) and including a communication mouth (261, 262, 263 ,264) for communicating the two spaces (241 to 244) with each other; and
a valve element (271, 272, 273, 274) for opening and closing the communication mouth (261 to 264),
wherein:
the valve element (271 to 274) is formed by a board for opening and closing the communication mouth (261 to 264) in accordance with a pressure difference between the two spaces (241 to 244);
a slanted board portion sloping with respect to a horizontal direction and having a shape of a board is formed at the partitioning member (26); and
the communication mouth (261 to 264) is formed by making a hole penetrating both sides of the slanted board portion.

According to this aspect, a the vapor valve is formed by a very simple components, namely, is formed by the partitioning member (26) at which a communication mouth (261 to 264) is formed and is also formed by a valve element (271 to 274) having a shape of a board or the like, wherein the valve element (271 to 274) opens and closes the communication mouth (261 to 264) based on the pressure differences. Therefore, it is possible to make the vapor valve small in size.

In addition, the slanted board portion sloping with respect to the horizontal direction is formed at the partitioning member (26), and the communication mouth (261 to 264) makes a hole penetrating both sides of the slanted board portion. Therefore, even if the gaseous refrigerant is cooled and condensed at a surface of the partitioning member (26), the condensed liquid refrigerant quickly flows on the slanted board portion down to a lower position. Accordingly, it is possible to suppress accumulation of the condensed refrigerant at a peripheral part of the communication mouth (261 to 264) or on the valve element (271 to 274). As a result, it is possible to perform open/close operation of the communication mouth (261 to 264) in a good condition by means of the valve element (271 to 274) even if the gaseous refrigerant is condensed.

In an invention described in Claim 2, the vapor valve for an adsorption refrigerator according to Claim 1, wherein the valve element (271 to 274) is located at an upper side of the communication mouth (261 to 264) with respect to the direction of the gravitation, and an edge portion of the valve element is fixed to a part of the slanted board portion, the part being located at a position higher than the communication mouth (261 to 264) with respect to the direction of the gravitation, in the vapor valve for the adsorption refrigerator described in Claim 1

With this aspect, it is possible to suppress occurrences in which the valve element (271 and 274) prevents the liquid refrigerant from flowing down along the slanted board portion. Therefore, it is possible to further suppress accumulation of the condensed refrigerant at a peripheral part of the communication mouth (261 to 264) or on the valve element (271 to 274). As a result, it is possible to perform open/close operation of the communication mouth (261 to 264) in a better condition by means of the valve element (271 to 274) even if the gaseous refrigerant is condensed.

In an invention described in Claim 3, a liquid refrigerant outlet (28) is formed in the casing (24) at a position lower than the communication mouth (261, 263) with respect to the direction of the gravitation, the liquid refrigerant outlet letting liquid refrigerant flow out of a space located at the upper side of the slanted portion with respect to the direction of the gravitation, in the vapor valve for the adsorption refrigerator described in Claim 1 or 2.

With this aspect, the liquid refrigerant which has flowed down along the slanted board portion flows out from the liquid refrigerant outlet (28). Therefore, it is possible to further suppress accumulation of the condensed refrigerant at a peripheral part of the communication mouth (261 to 264) or on the valve element (271 to 274). As a result, it is possible to perform open/close operation of the communication mouth (261 to 264) in a better condition by means of the valve element (271 to 274) even if the gaseous refrigerant is condensed.

In an invention described in Claim 4, the vapor valve for an adsorption refrigerator according to Claim 1 or 2, wherein the partitioning member (26) includes a vertical board portion located at a position lower than the slanted board portion, wherein a slope angle of the vertical board portion with respect to the horizontal line is closer to a right angle than the slanted board portion is, in the vapor valve for the adsorption refrigerator described in Claim 1 or 2.

With this aspect, the liquid refrigerant which has flowed down along the slanted board portion remains in a space partitioned by the vertical board portion, that is, in a space located below the communication mouth (262, 264). Therefore, it is possible to further suppress accumulation of the condensed refrigerant at a peripheral part of the communication mouth (261 to 264) or on the valve element (271 to 274). As a result, it is possible to perform open/close operation of the communication mouth (261 to 264) in a better condition by means of the valve element (271 to 274) even if the gaseous refrigerant is condensed.

In an invention described in Claim 5, an adsorption refrigerator includes: a vapor valve (24, 26, 271 to 274) for an adsorption refrigerator according to any one of Claims 1 to 4;
an adsorber (11, 12) for causing the adsorbent material to adsorb and desorb the refrigerant;
a condenser (13) for condensing the gaseous refrigerant desorbed at the adsorber (11, 12) and thereby transforming the gaseous refrigerant into liquid refrigerant; and
an evaporator (14) for evaporating the liquid refrigerant condensed at the condenser (13) and thereby transforming the liquid refrigerant to the gaseous refrigerant,
wherein flow of the gaseous refrigerant is controlled as the valve element (271 to 274) opens and closes the communication mouth (261 to 264).

Note that the reference numerals in parentheses for each of the means that are described above indicate correspondences with specific means that are described in the embodiments that are hereinafter described.

### [Brief Description of Drawings]

[FIG. 1]

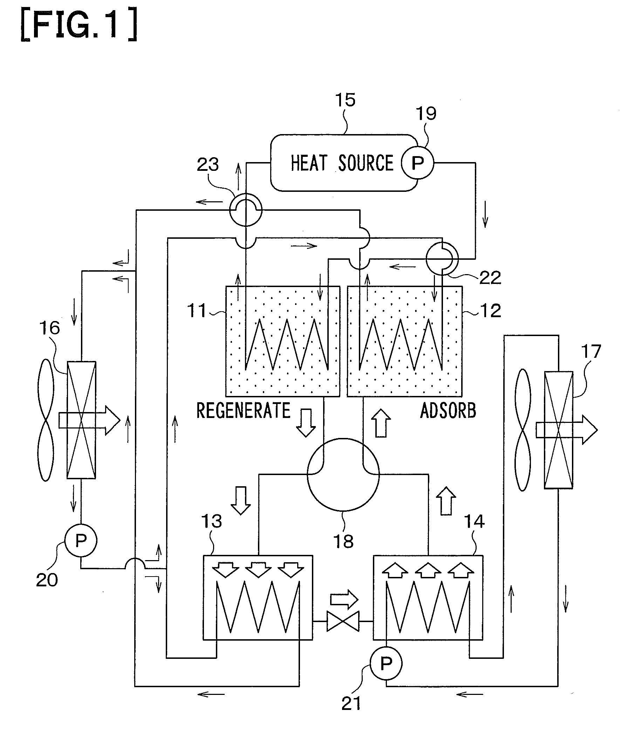

   FIG. 1 is an overall configuration diagram of an adsorption refrigerator according to an embodiment of the present invention showing a first operation status.
[FIG. 2]

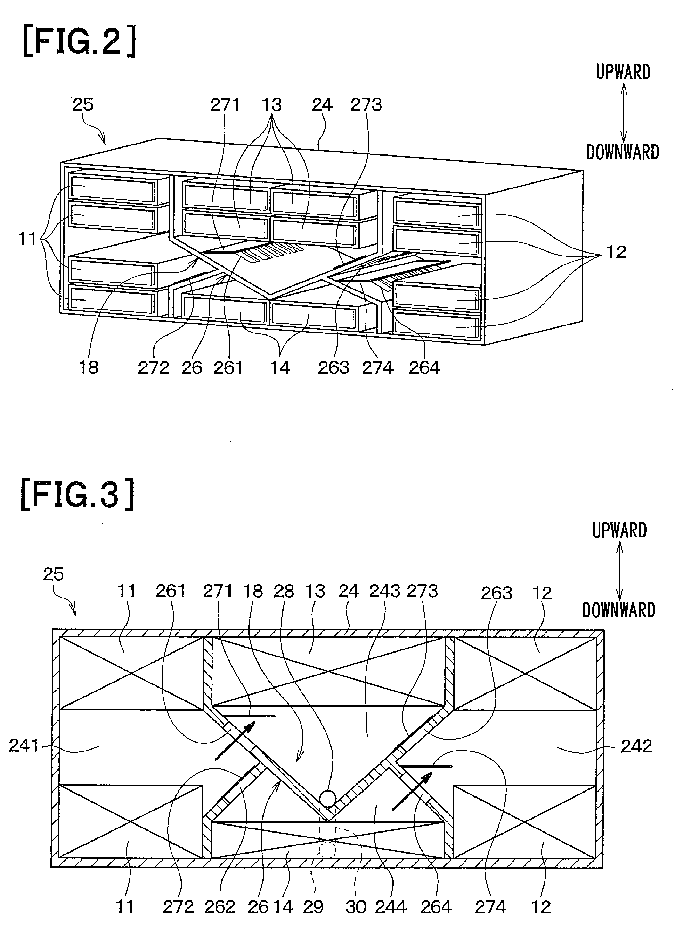

   FIG. 2 is a perspective view of a refrigerator unit.
[FIG. 3]
   FIG. 3 is a cross-sectional view of the refrigerator unit in Fig. 2 showing the first operation status.
[FIG. 4]

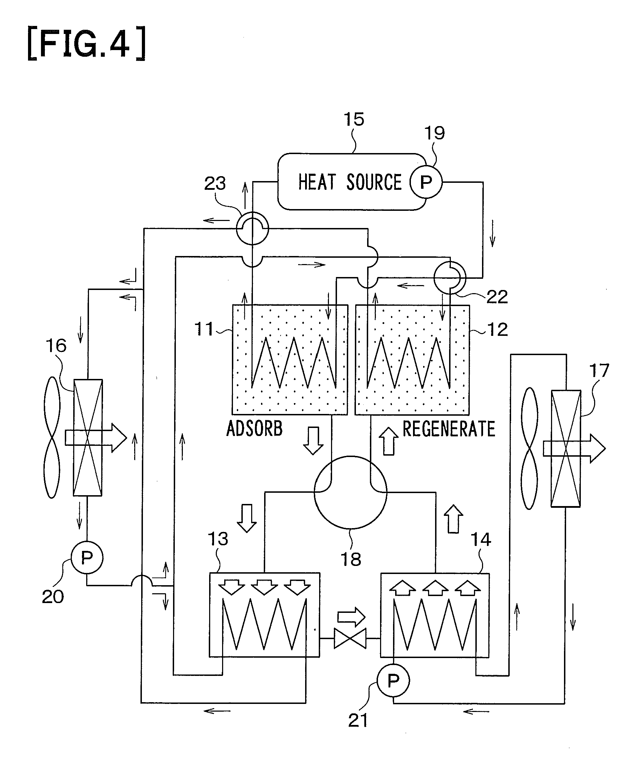

   FIG. 4 is an overall configuration diagram of an adsorption refrigerator according to a first embodiment of the present invention showing a second operation status.
[FIG. 5]

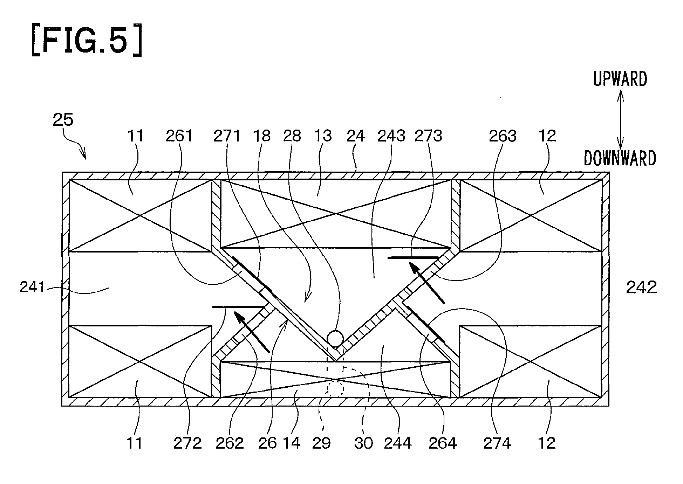

   FIG. 5 is a cross-sectional view of the refrigerator unit in Fig. 2 showing the second operation status.

### [Description of Embodiments]

An embodiment of the present invention is described with reference to Figs. 1 to 5. FIG. 1 is an overall configuration diagram of an adsorption refrigerator according to the present embodiment. The adsorption refrigerator includes two adsorbers, namely, first and second adsorbers 11 and 12, a condenser 13, and an evaporator 14.

First heat carrier (which is water in this embodiment) flows through the interiors of the first and second adsorbers 11 and 12. Adsorbent for adsorbing and desorbing the refrigerant is supported at surfaces of the first and second adsorbers 11 and 12.

High-temperature heat carrier heated at a heat source 15 and low-temperature heat carrier cooled at an outdoor unit 16 can be switchably selected as the first heat carrier flowing through the first and second adsorbers 11 and 12. The outdoor unit 16 is a heat exchanger for releasing heat which cools the first heat carrier by causing the heat carrier and the outdoor air to exchange heat.

In the case that the low temperature heat carrier flows through the interior of the first and second adsorbers 11 and 12, the adsorbers adsorb gaseous refrigerant. In the case that the high temperature heat carrier flows through the interior of the first and second adsorbers 11 and 12, the adsorbers desorb refrigerant. Zeolite or silica gel can be used as the adsorbers.

The condenser 13 condenses gaseous refrigerant by causing the first heat carrier cooled at the outdoor unit 16 and gaseous refrigerant (which is water vapor in the present embodiment) to exchange heat, wherein the gaseous refrigerant is desorbed at either one of the first and second adsorbers 11 and 12.

The evaporator 14 causes liquid refrigerant (which is water in the present embodiment) condensed at the condenser 13 and second heat carrier (which is water in the present embodiment) from an indoor unit 17 to exchange heat so as to evaporate the liquid refrigerant. The gaseous refrigerant evaporated at the evaporator 14 is adsorbed at either one of the first and second adsorbers 11 and 12. The indoor unit 17 is a heat exchanger for cooling which cools indoor air by causing the second heat carrier and the indoor air to exchange heat, wherein heat in the second heat carrier has been absorbed at the evaporator 14.

The flow of the gaseous refrigerant between the first adsorber 11, the second adsorber 12, the condenser 13 and the evaporator 14 is controlled by a vapor valve 18.

In Fig. 1, pumps 19 and 20 circulate the first heat carrier, and a pump 21 circulates the second heat carrier. Switching valves 22 and 23 switch a circulating path of the first heat carrier.

As is shown in Figs. 2 and 3, the first adsorber 11, the second adsorber 12, the condenser 13, the evaporator 14, and the vapor valve 18 are housed in a casing 24 to form a refrigerator unit 25. Fig. 2 is a perspective view showing an interior of the refrigerator unit 25 in a manner that a part of the interior is transparently shown. Fig. 3 is a cross-sectional view of the refrigerator unit 25. In Figs. 2 and 3, an arrow directed upward and downward shows a vertical direction (the direction of the gravitation) of the refrigerator unit 25 in the case it is installed.

The casing 24 has an external shape of a cuboid or the like, and refrigerant is enclosed in the casing 24 while the interior of the casing 24 is kept airtight. At the interior of the casing 24 a partitioning member 26 is formed which partitions the interior space having a shape of a cuboid or the like into four compartment spaces 241 to 244 which are arranged at top, bottom, left, and right of the interior space.

The first adsorber 11 is housed at an upper portion and a lower portion of a left side space 241. In the same manner, the second adsorber 12 is housed at an upper portion and a lower portion of a right side space 242. The condenser 13 is housed at an upper portion of an upper side space 243, and the evaporator 14 is housed at a lower portion of a lower side space 244.

The partitioning member 26 is formed by combining a plurality of board portions. More specifically, a portion of the partitioning member 26 located below the condenser 13 and keeping the upper side space 243 separate from the other spaces 241, 242, and 244 is formed by combining two board portions in a V-shape, wherein one of the two board portions is a slanted board portion sloping downward from a left side to a central side in the horizontal direction and the other one of the two board portions is a slanted board portion sloping downward from a right side to a central side in the horizontal direction.

Another portion of the partitioning member 26 located above the evaporator 14 and keeping the left side space 241 separate from the lower side space 244 is formed by a slanted board portion sloping downward from a central side in the horizontal direction to a left side. Another portion located under this slanted board portion is formed by a vertical board portion extending orthogonally to the horizontal direction.

In the same manner, another portion of the partitioning member 26 located above the evaporator 14 and keeping the right side space 242 separate from the lower side space 244 is formed by a slanted board portion sloping downward from a central side in the horizontal direction to a right side. Another portion located under this slanted board portion is formed by a vertical board portion extending orthogonally to the horizontal direction.

In the present embodiment, each of the above-described slanted board portions has a shape of a flat board. However, each of them may have any one of various board shapes such as a shape of a curved board having a cross-section of a circular arc-shape and a shape of a flat board having small unevenness. In addition, the vertical board portions do not have to extend orthogonally to the horizontal direction, and it is sufficient if their slope angles with respect to the horizontal line are closer to the right angle than the corresponding slanted board portion is.

communication mouths 261 communicating the left side space 241 to the upper side space 243, communication mouths 262 communicating the left side space 241 to the lower side space 244, communication mouths 263 communicating the right side space 242 to the upper side space 243, and communication mouths 264 communicating the right side space 242 to the lower side space 244 are formed at the above-described slanted board portions.

The communication mouths 261 to 264 are formed by making holes penetrating both sides of the respective slanted board portions and serve as valve ports of the vapor valve 18 in Fig .1. In the present embodiment, a large number of rectangular communication mouths are located to form a single rectangular shape or the like for each group of the communication mouths 261 to 264.

Each of valve elements of the vapor valve 18, namely, valve elements 271, 272, 273, and 274 for opening and closing the communication mouths 261 to 264 is formed by a board provided to the partitioning member 26. Each of the valve elements 271, 272, 273, and 274 is a member such as a reed valve or the like which automatically opens and closes each of the communication mouths 261 to 264 in accordance with a pressure difference between a front side and a rear side of said each of the communication mouths 261 to 264.

The valve elements 271 to 274 may be made of polycarbonate resin or the like. If the valve elements 271 to 274 are made of elastic material such as silicon rubber, fluorine-contained rubber, and urethane, it is possible to improve adhesiveness of the valve elements 271 to 274 to peripheral parts of the communication mouths 261 to 264. Each of the valve elements 271 to 274 may also be made of a thin elastic body such as a thin metal board. In the present embodiment, each of the valve elements 271 to 274 is formed to have a rectangular shape.

The weight of each of the valve element 271 to 274 is determined based on the slope angle and the pressure difference of the partitioning member 26. Thus, the valve elements come in close airtight contact with and get apart from the peripheral parts of the communication mouths 261 to 264 based on the pressure difference between the front sides and the rear sides of the communication mouths 261 to 264.

The valve element 271 for opening and closing the communication mouths 261 is located to the corresponding slanted board portion of the partitioning member 26 at the upper side space 243 side of the corresponding slanted board portion. One edge of the valve element 271 is fixed to the corresponding slanted board portion of the partitioning member 26 at an upper peripheral side of the communication mouths 261. Accordingly, the valve element 271 opens the communication mouths 261 in the case that an internal pressure of the left side space 241 is larger than an internal pressure of the upper side space 243, and closes the openings 261 in the other case.

The valve element 272 for opening and closing the communication mouths 262 is located to the corresponding slanted board portion of the partitioning member 26 at the left side space 241 side of the corresponding slanted board portion. One edge of the valve element 272 is fixed to the corresponding slanted board portion of the partitioning member 26 at an upper peripheral side of the communication mouths 262. Accordingly, the valve element 272 opens the communication mouths 262 in the case that an internal pressure of the lower side space 244 is larger than an internal pressure of the left side space 241, and closes the openings 262 in the other case.

The valve element 273 for opening and closing the communication mouths 263 is located to the corresponding slanted board portion of the partitioning member 26 at the upper side space 243 side of the corresponding slanted board portion. One edge of the valve element 273 is fixed to the corresponding slanted board portion of the partitioning member 26 at an upper peripheral side of the communication mouths 263. Accordingly, the valve element 273 opens the communication mouths 263 in the case that an internal pressure of the right side space 242 is larger than an internal pressure of the upper side space 243, and closes the openings 263 in the other case.

The valve element 274 for opening and closing the communication mouths 264 is located to the corresponding slanted board portion of the partitioning member 26 at the right side space 242 side of the corresponding slanted board portion. One edge of the valve element 274 is fixed to the corresponding slanted board portion of the partitioning member 26 at an upper peripheral side of the communication mouths 264. Accordingly, the valve element 274 opens the communication mouths 264 in the case that an internal pressure of the lower side space 244 is larger than an internal pressure of the right side space 242, and closes the openings 263 in the other case.

A liquid refrigerant outlet 28 for letting liquid refrigerant condensed at the condenser 13 flow out is formed at wall surface located at the lowest part of the upper side space 243 in the casing 24. A liquid refrigerant inlet 29 for letting the liquid refrigerant from the liquid refrigerant outlet flow into the lower side space 244 is formed at wall surface located at the lower side space 244 in the casing 24. The liquid refrigerant outlet 28 and the liquid refrigerant inlet 29 are connected with a liquid refrigerant pipe 30 located outside of the casing 24.

Although it is not shown in the drawings, a pipe outlet is formed at the casing 24 to extend pipes out of the casing 24, one of the pipes is a pipe for letting the first heat carrier flow into and flow out of the first adsorber 11, the second adsorber 12, and the condenser 13 and another one of the pipes is a pipe for letting the second hear carrier flow into and flow out of the evaporator 14.

Next, operation of the above-described configuration is described. First, the switching valves 22 and 23 are controlled to operate in the manner shown in Fig. 1 so that the high-temperature first heat carrier is circulated between the heat source 15 and the first adsorber 11 and the low-temperature first heat carrier is circulated between the outdoor unit 16, the second adsorber 12, and a condenser 13.

Accordingly, the first adsorber 11 gets into a desorbing phase for desorbing adsorbed refrigerant and the second adsorber 12 gets into an adsorbing phase for adsorbing gaseous refrigerant. Therefore, adsorbent material is regenerated at the first adsorber 11, and air blowing out into a room is cooled by refrigerating capacity generated at the second adsorber 12.

At this time, in the refrigerant unit 25, since the desorption of the refrigerant from the first adsorber 11 increases the internal pressure of the left side space 241 housing the first adsorber 11, the valve element 271 opens the communication mouths 261. Accordingly, the gaseous refrigerant desorbed from the first adsorber 11 flows from the left side space 241 to the upper side space 243 and is condensed at the condenser 13.

The liquid refrigerant condensed at the condenser 13 falls onto slanted board portions of the partitioning member 26, flows down along these slanted board portions of the partitioning member 26 to the lowest part of the upper side space 243, flows through the liquid refrigerant outlet 28, the liquid refrigerant pipe 30, and the liquid refrigerant inlet 29, and then flows in the lower side space 244. The liquid refrigerant which has flowed in the lower side space 244 is evaporated at the evaporator 14.

Then, since the evaporation of the liquid refrigerant at the evaporator increases the internal pressure of the lower side space 244 housing the evaporator 14, the valve element 274 opens the communication mouths 264. Accordingly, the gaseous refrigerant evaporated at the evaporator 14 flows from the lower side space 244 to the right side space 242 and is adsorbed by the second adsorber 12.

Since the internal pressure of the lower side space 244 is lower than the internal pressure of the left side space 241, the communication mouths 262 are closed by the valve element 272. In addition, since the internal pressure of the right side space 242 is lower then the internal pressure of the upper side space 243, the communication mouths 263 are closed by the valve element 273.

When this state (i.e. a first operation state) has lasted a predetermined time, the switching valves 22 and 23 are controlled to operate in the manner shown in Fig. 4 so that the high-temperature first heat carrier is circulated between the heat source 15 and the second adsorber 12 and the low-temperature first heat carrier is circulated between the outdoor unit 16, the first adsorber 11, and a condenser 13.

Accordingly, the first adsorber 11 gets into the adsorbing phase, and the second adsorber 12 gets into the desorbing phase. Therefore, air-conditioning blow is cooled by refrigerating capacity generated at the first adsorber 11, and adsorbent material is regenerated at the second adsorber 12.

At this time, in the refrigerant unit 25, since the desorption of the refrigerant from the second adsorber 12 increases the internal pressure of the right side space 242 housing the second adsorber 12, the valve element 273 opens the communication mouths 263. Accordingly, the gaseous refrigerant desorbed from the second adsorber 12 flows from the right side space 242 to the upper side space 243 and is condensed at the condenser 13.

The liquid refrigerant condensed at the condenser 13 falls onto slanted board portions of the partitioning member 26, flows down along these slanted board portions of the partitioning member 26 to the lowest part of the upper side space 243, flows through the liquid refrigerant outlet 28, the liquid refrigerant pipe 30, and the liquid refrigerant inlet 29, and then flows in the lower side space 244. The liquid refrigerant which has flowed in the lower side space 244 is evaporated at the evaporator 14.

Then, since the evaporation of the liquid refrigerant at the evaporator increases the internal pressure of the lower side space 244 housing the evaporator 14, the valve element 272 opens the communication mouths 262. Accordingly, the gaseous refrigerant evaporated at the evaporator 14 flows from the lower side space 244 to the left side space 241 and is adsorbed by the first adsorber 11.

Since the internal pressure of the lower side space 244 is lower than the internal pressure of the right side space 242, the communication mouths 264 are closed by the valve element 274. In addition, since the internal pressure of the left side space 242 is lower then the internal pressure of the upper side space 243, the communication mouths 261 are closed by the valve element 271.

When this state (i.e. a second operation state) has lasted a predetermined time, the switching valves 22 and 23 are controlled to operate again in the state shown in Fig. 1 (i.e. the first operation state). Thus, the adsorption refrigerator is continuously operated by alternately repeating the first operation state in Figs. 1 and 3 and the second operation state in Figs. 2 and 4 while keeping each of the operation states for the predetermined time.

The predetermined time can be properly selected based on a residual amount of the liquid refrigerant in the casing 24, adsorption capacity of adsorbent material in the first and second adsorbers 11 and 12.

According to the present embodiment, the vapor valve 18 is formed by a very simple components, namely, formed by the partitioning member 26 at which communication mouths 261 to 264 are formed and is also formed by valve elements 271 to 274 having a shape of a board or the like, wherein the valve elements 271 to 274 open and close the respective communication mouths 261 to 264 based on respective pressure differences. Therefore, it is possible to make the vapor valve 18 small in size and it is thereby possible to make the adsorption refrigerator small in size.

In addition, the communication mouths 261 to 264 are formed at the respective slanted flat portions of the partitioning member 26, wherein the slanted flat portions slope with respect to the horizontal direction. Therefore, even if the gaseous refrigerant is cooled and condensed at a surface of the partitioning member 26, the condensed liquid refrigerant quickly flows on the slanted board portions down to lower positions. Accordingly, it is possible to suppress accumulation of the condensed refrigerant at peripheral parts of the communication mouths 261 to 264 or on the valve elements 271 to 274. As a result, there is no difficulty in performing open/close operation of the communication mouths 261 to 264 in a good condition by means of the valve elements 271 to 274 even if the gaseous refrigerant is condensed.

In addition, the valve elements 271 to 274 are located at an upper side of the respective communication mouths 261 to 264 with respect to the direction of the gravitation, and an edge portion of each of the valve elements 271 to 274 is fixed to a part of the respective slanted board portion, wherein the part is located at a position higher than the respective one of the communication mouths 261 to 264 with respect to the direction of the gravitation. Therefore, it is possible to suppress occurrences in which the valve elements 271 and 274 prevent the liquid refrigerant from flowing down along the respective slanted board portions.

Therefore, it is possible to further suppress accumulation of the condensed refrigerant at peripheral parts of the communication mouths 261 to 264 or on the valve elements 271 to 274. As a result, it is possible to perform open/close operation of the communication mouths 261 to 264 in a better condition by means of the valve elements 271 to 274 even if the gaseous refrigerant is condensed.

In addition, in the top side area 243, the liquid refrigerant which has flowed down along the respective slanted board portions flows out from the liquid refrigerant outlet 28 located at the lowest part of the upper side space 243. Therefore, it is possible to further suppress accumulation of the condensed refrigerant at peripheral parts of the communication mouths 261 to 264 or on the valve elements 271 to 274. As a result, it is possible to perform open/close operation of the communication mouths 261 to 264 in a better condition by means of the valve elements 271 to 274 even if the gaseous refrigerant is condensed.

In addition, in the partitioning member 26, the vertical board portions extending orthogonally to the horizontal direction are formed at a lower side of the respective slanted board portions at which the communication mouths 262 and 264 are formed. Therefore, the liquid refrigerant which has flowed down along the slanted board portions in the left side space 241 and the right side space 242 remains in respective spaces partitioned by the respective vertical board portions, that is, in respective spaces located below the respective communication mouths 262 and 264. Therefore, it is possible to further suppress accumulation of the condensed refrigerant at peripheral parts of the communication mouths 261 to 264 or on the valve elements 271 to 274. As a result, it is possible to perform open/close operation of the communication mouths 261 to 264 in a better condition by means of the valve elements 271 to 274 even if the gaseous refrigerant is condensed.

### (Other embodiments)

In the above embodiment, each of the communication mouths 261 to 264 is formed to have a rectangular shape. However, each of the communication mouths 261 to 264 may be formed to have a circular shape.

In the above embodiment, the valve elements 271 to 274 are located at upper sides of the respective communication mouths 261 to 264 with respect to the direction of the gravitation. However, the valve elements 271 to 274 may be located at lower sides of the respective communication mouths 261 to 264 with respect to the direction of the gravitation.

In adopting this location, the directions of sloping of the slanted board portions of the partitioning member 26 should be reversed. For example, if the slanted board portion at which the communication mouths 261 formed is made so as to slope downward from a central side in the horizontal direction to a left side, the same open/close operation as the above embodiment becomes possible by locating the valve element 271 at lower side of the communication mouths 261 with respect to the direction of the gravitation.

In the above embodiment, an edge portion of each of the valve elements 271 to 274 is fixed to a part of the respective slanted board portion, wherein the part is located at a position higher than the respective one of the communication mouths 261 to 264 with respect to the direction of the gravitation. However, an edge portion of each of the valve elements 271 to 274 may fixed to another part of the respective slanted board portion, wherein the another part is located at a position lower than the respective one of the communication mouths 261 to 264 with respect to the direction of the gravitation.

In the above embodiment, the first adsorber 11, the second adsorber 12, the condenser 13, the evaporator 14, and the vapor valve 18 are housed in the casing 24 to form the single refrigerant unit 25. However, the first adsorber 11, the second adsorber 12, the condenser 13, the evaporator 14, and the vapor valve 18 may be housed in respective separate casings and the casings may be connected with each other through refrigerant pipes.

### [Reference Signs list]

- 11, 12: adsorber
- 13: condenser
- 14: evaporator
- 18: vapor valve
- 24: casing
- 241: left side space
- 242: right side space
- 243: upper side space
- 244: lower side space
- 26: partitioning member
- 261 to 264: communication mouths
- 271 to 274: valve element
- 28: refrigerant outlet

## Claims

1. A vapor valve for an adsorption refrigerator, the vapor valve controlling flow of gaseous refrigerant in the adsorption refrigerator having adsorbent material for adsorbing and desorbing gaseous refrigerant, comprising:
a casing (24) for forming a space in which the gaseous refrigerant is contained;
a partitioning member (26) for partitioning an interior of the casing (24) into two spaces (241, 242, 243, 244) and including a communication mouth (261, 262, 263 ,264) for communicating the two spaces (241 to 244) with each other; and
a valve element (271, 272, 273, 274) for opening and closing the communication mouth (261 to 264),
wherein,
the valve element (271 to 274) is formed by a board for opening and closing the communication mouth (261 to 264) in accordance with a pressure difference between the two spaces (241 to 244),
a slanted board portion sloping with respect to a horizontal direction and having a shape of a board is formed at the partitioning member (26), and
the communication mouth (261 to 264) is formed by making a hole penetrating both sides of the slanted board portion.

2. The vapor valve for an adsorption refrigerator according to Claim 1, wherein the valve element (271 to 274) is located at an upper side of the communication mouth (261 to 264) with respect to the direction of the gravitation, and an edge portion of the valve element is fixed to a part of the slanted board portion, the part being located at a position higher than the communication mouth (261 to 264) with respect to the direction of the gravitation.

3. The vapor valve for an adsorption refrigerator according to Claim 1 or 2, wherein a liquid refrigerant outlet (28) is formed in the casing (24) at a position lower than the communication mouth (261, 263) with respect to the direction of the gravitation, the liquid refrigerant outlet letting liquid refrigerant flow out of a space located at the upper side of the slanted portion with respect to the direction of the gravitation.

4. The vapor valve for an adsorption refrigerator according to Claim 1 or 2, wherein the partitioning member (26) includes a vertical board portion located at a position lower than the slanted board portion, wherein a slope angle of the vertical board portion with respect to the horizontal line is closer to a right angle than the slanted board portion is.

5. An adsorption refrigerator comprising:
a vapor valve (24, 26, 271 to 274) for an adsorption refrigerator according to any one of Claims 1 to 4;
an adsorber (11, 12) for causing the adsorbent material to adsorb and desorb the refrigerant;
a condenser (13) for condensing the gaseous refrigerant desorbed at the adsorber (11, 12) and thereby transforming the gaseous refrigerant into liquid refrigerant; and
an evaporator (14) for evaporating the liquid refrigerant condensed at the condenser (13) and thereby transforming the liquid refrigerant to the gaseous refrigerant,
wherein flow of the gaseous refrigerant is controlled as the valve element (271 to 274) opens and closes the communication mouth (261 to 264).
